# EUROPEAN PATENT SPECIFICATION

(11) **EP 0 413 994 B1**
(45) Date of publication and mention of the grant of the patent: **28.12.1994**
(21) Application number: 90114516.9
(22) Date of filing: 27.07.1990
(51) Int. Cl.: H01G 9/00

(54) **Electrical double-layer capacitor**
Elektrischer Doppelschichtkondensator
Condensateur électrique à double couche

(30) Priority: 23.08.1989 JP 216967/89
(43) Date of publication of application: 27.02.1991
(73) Proprietor: Isuzu Motors Limited, Shinagawa-ku, Tokyo 140 (JP)
(72) Inventor: Kurabayashi, Ken, Chigasaki-shi, Kanagawa (JP); Tsuchiya, Yoshinobu, Fujisawa-shi, Kanagawa (JP); Yoshida, Akio, Kamakura-shi, Kanagawa (JP); Koizumi, Hitoshi, Hiratsuka-shi, Kanagawa (JP); Niida, Yoriaki, Yamato-shi, Kanagawa (JP)
(74) Representative: Roth, Ronald, Dipl.-Ing.

(56) References cited:
- JP-A-56 070 623
- JP-A-56 080 120
- PATENT ABSTRACTS OF JAPAN,vol. 13, no. 386 (E-812)(3734) 25 August 1989, & JP-A-01 136326
- PATENT ABSTRACTS OF JAPAN,vol. 12, no. 186 (C-500)(3033) 31 May 1988, & JP-A-62 292612

## Description

The present invention relates to an electrical double-layer capacitor having a small internal resistance.

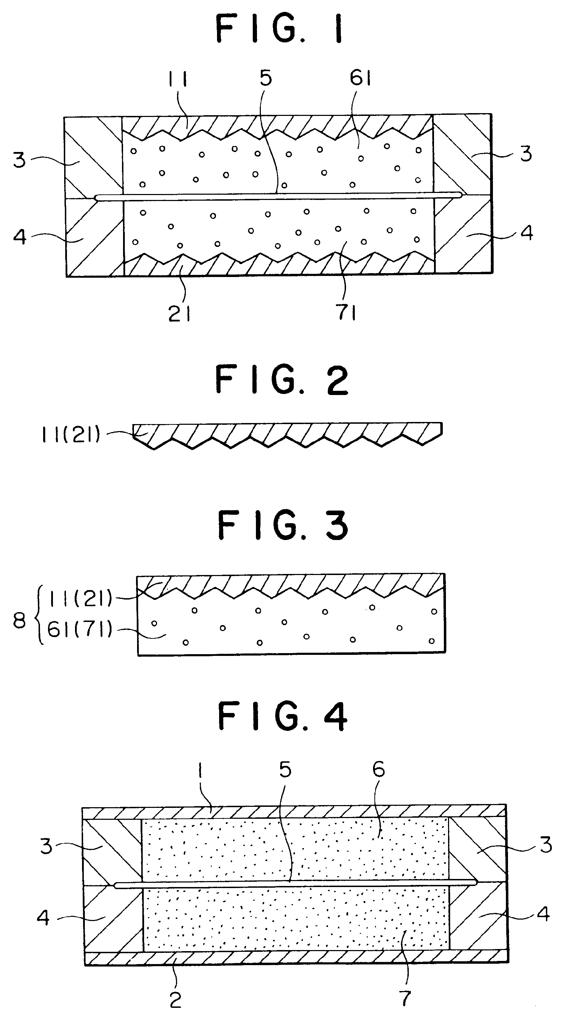

In Fig.4 is shown a conventional electrical double-layer capacitor cell. In Fig.4, numeral 1 and 2 denote collecting electrodes, 3 and 4 gaskets, 5 a separator, and 6 and 7 paste-like polarising electrodes.

The collecting electrodes 1 and 2 consist of conductive rubber sheets, and the gaskets 3 and 4 consist of insulating rubber. The paste-like polarising electrodes 6 and 7 are made of paste-like active carbon powder having immersed dilute sulfuric acid therein. For the separator 5, a porous plastic film is used which is permeable to ions, but does not pass through the active carbon particles.

In order to ensure a good mutual contact of the active carbon particles and to achieve a good contact between the collecting electrode 1 to the paste-like polarising electrode 6 and between the collecting electrode 2 and the paste-like polarising electrode 7 pressure ( 1 to 100 kg/cm² ) is applied on the collecting electrodes 1 and 2. In order not to be destructed by this pressure, the materials for the collecting electrodes 1 and 2 and for the gaskets 3 and 4 should have elastic properties.

In order to make the capacity of such an electrical double-layer capacitor cell large, the specific surface area ( usually, 1000 to 2000 m² /g ) of the active carbon forming the polarising electrode is increased and the bulk density in the case after having been filled is made large.

On the other hand, since the polarising electrode is difficult to handle in its paste-like form, there has been proposed a method in which it is sintered to become a solid plate-like form ( see, for example, the official publication of the Japanese Patent Application Laid-Open No. 292612/1987 ). When it is formed as a solid plate, there is also the advantage that the bulk density is enhanced and the capacity is increased, and together with that, the contact of the active carbon particles to each other becomes denser to decrease the contact resistance.

However, the above-described conventional electrical double-layer capacitor cell has a part where a large contact resistance between the particles of the active carbon to each other is present, and there has been the problem that the internal resistance as a whole can not be decreased. This is due to the following:
(1) In an electrical double-layer capacitor cell wherein a paste-like polarising electrode has been used as a polarising electrode, the mutual contact resistance between active carbon particles is large. Although pressurizing is carried out in order to reduce the resistance, the pressurizing force is generated by caulking the wrapping case.
   However, when the electrical double-layer capacitor cell is to be of a large type, the pressurizing force required is increased since the area to be pressed becomes large, but due to the restriction from the raw material side of the wrapping case, etc., there are limits in the size of the pressurizing force capable of being generated. Therefore, it is impossible to apply the necessary pressure, and there is a limit for reducing the contact resistance.
(2) In an electrical double-layer capacitor cell using a solid plate-like polarising electrode as a polarising etectrode, the mutual contact of the active carbon particles becomes good, and the contact resistance between particles to each other is reduced, but since the contact between the solid plate-like polarising electrode and the collecting electrode is not uniform, the contact resistance between both members is inevitably increased.

In order to ensure a good contact between the solid plate-like polarising electrode and the collecting electrode, a method can be considered in which pressure is applied on the collecting electrode, and the solid plate-like polarising electrode is forcedly pushed.

However, when proceeding in the manner as described above, there is the danger of destructing the solid plate-like polarising electrode by the force applied, and therefore, this method can not be adopted.

The object of the present invention is to diminish the internal resistance of an electrical double-layer capacitor cell by decreasing the contact resistance between the collecting electrode and the polarising electrode in an electrical double-layer capacitor cell.

Another object of the present invention is to make the handling of parts in the case of the production procedure, etc. easy, by sparing the paste-like parts in the construction parts of an electrical double-layer capacitor cell.

In order to attain the above-described objects, an electrical double-layer capacitor cell according to claim 1 is provided.

These and other objects of the invention will become more apparent in the detailed description and examples which follow.
Fig.1 is a diagram showing the electrical double-layer capacitor cell according to an embodiment of the present invention;
Fig.2 is a diagram showing a collecting electrode formed by sintering;
Fig.3 is a diagram showing a sintered body formed by combined sintering of the collecting electrode and the polarising electrode; and
Fig.4 is a diagram showing a conventional electrical double-layer capacitor cell.

In the following, embodiments of the present invention will be explained in detail by referring to drawings.

Fig.1 shows the electrical double-layer capacitor cell according to the embodiment of the present invention, Fig.2 shows a collecting electrode formed by sintering, and Fig.3 shows a sintered body combinedly sintered with the collecting electrode and the polarising electrode totally.

In these figures, symbols correspond to those of Fig.4. Symbols 11 and 21 denote collecting electrodes, 61 and 71 solid-like polarising electrodes, and 8 a combined sintered body.

In the present invention, the collecting electrode and the polarising electrode are made to have a totalized structure, and the contact resistance between both of them is diminished.

At first, as shown in Fig.2, conductive particles such as active carbon particles, carbon black particles, etc., are pressed and sintered to have a high density, and a plate-like collecting electrode 11 (21) is formed.

Next, on one surface of this plate-like collecting electrode 11 (21), a solid-like polarising electrode 61 (71) is formed and totally adhered by sintering active carbon particles, and a combined sintered body 8 is constructed as shown in Fig.3. As the concrete method for sintering in this case, a method can be cited in which, for example, active carbon is put on the collecting electrode 11 (21) and pressed, and the particle surface is molten and sintered in this state by plasma melting, etc. By performing in such a manner, active carbon is sintered while it is preserving porosity. Then, the solid-like polarising electrode 61 (71) is impregnated with an electrolytic liquid such as dilute sulfuric acid, etc.

By the way, in order to make the adhesion of the solid-like polarising electrode 61 (71) to the collecting electrode 11 (21) good, unevenness may be provided on the adhering surface of the collecting electrode 11 (21) when necessary ( in Fig. 1 to 3, the unevenness is provided ).

An electrical double-layer capacitor cell is constituted, by using two of these combined sintered bodies 8 formed in the manner as has been described above and arranging same by being separated with a separator 5, wherein the circumference thereof is insulated and preserved with gaskets 3 and 4.

In such an electrical double-layer capacitor cell as described above, since the collecting electrode and the solid-like polarising electrode are integrally formed, the resistance of the contact partsbetween both members becomes extremely small. Since two members are simultaneously totally solidified, the handling at the time of production procedures, etc. becomes advantageous ( handling properties are excellent ). Also, since a solid-like polarising electrode is adopted as the polarising electrode, the contact resistance between the active carbon particles in the polarising electrode is small.

## Claims

1. An electrical double-layer capacitor comprising a collecting electrode *(11, 21)* and a polarising electrode *(61, 71)*, characterised in that the collecting electrode *(11, 21)* and the polarising electrode *(61, 71)* are a combined sintered body, whereby the collecting electrode *(11, 21)* is constituted by pressed and sintered conductive particles forming a plate of high density whereon on one surface active carbon particles are sintered to form a solid and porous polarising electrode *(61, 71)*.

2. An electrical double-layer capacitor as claimed in claim 1, characterised in that the boundary surface between the collecting electrode *(11, 21)* and the polarising electrode *(61, 71)* is not even.

## Patentansprüche

1. Elektrischer Doppelschichtkondensator mit einer Sammelelektrode (11, 21) und einer polarisierenden Elektrode (61, 71), dadurch gekennzeichnet, daß die Sammelelektrode (11, 21) und die polarisierende Elektrode (61, 71) ein kombinierter Sinterkörper sind, wobei die Sammelelektrode (11, 21) durch gepreßte und gesinterte leitende Partikel gebildet ist, die eine Platte hoher Dichte bilden, auf der auf einer Oberfläche Aktivkohlepartikel zur Bildung einer festen und porösen polarisierenden Elektrode (61, 71) gesintert sind.

2. Elektrischer Doppelschichtkondensator nach Anspruch 1, dadurch gekennzeichnet, daß die Grenzfläche zwischen der Sammelelektrode (11, 21) und der polarisierenden Elektrode (61, 71) nicht eben ist.

## Revendications

1. Condensateur électrique à double couche comprenant une électrode collectrice (11,21) et une électrode polarisante (61,71), caractérisé en ce que l'électrode collectrice (11,21) et l'électrode polarisante (61,71) sont un corps fritté combiné, grâce à quoi l'électrode collectrice (11,21) est constituée de particules conductrices frittées et pressées formant une plaque de haute densité sur une surface de laquelle des particules de carbone actif sont frittées pour former une électrode polarisante solide et poreuse (61,71).

2. Condensateur électrique à double couche selon la revendication 1, caractérisé en ce que la surface frontière entre l'électrode collectrice (11,21) et l'électrode polarisante (61,71) est inégale.
